# EUROPÄISCHE PATENTANMELDUNG

(11) **EP 2 108 896 A2**
(43) Veröffentlichungstag der Anmeldung: **14.10.2009**
(21) Anmeldenummer: 09004634.3
(22) Anmeldetag: 31.03.2009
(51) Int. Cl.: F24D 19/10

(54) **Wassererwärmungssystem**

(30) Priorität: 08.04.2008 DE 102008017698
(71) Anmelder: Robert Bosch GmbH, 70442 Stuttgart (DE)
(72) Erfinder: Farinha, José Pedro Oliveira Lima, 3810 Aveiro (PT)

(57) **Zusammenfassung**

Die Erfindung betrifft ein Wassererwärmungssystem nach dem Durchlaufprinzip, umfassend einen brennstoffbeheizten Wassererwärmer mit einem Brenner, einer Brennstoffzuführleitung, einem Brennstoffdosierventil, einem Wärmeübertrager, einer Kaltwasserzulaufleitung, einer Warmwasserauslaufleitung und einem Wasserschalter zur Erkennung eines Wasserdurchflusses durch den Wassererwärmer, des Weiteren umfassend mindestens eine Zapfstelle zum Zapfen von Warmwasser sowie Rohrleitungen zur hydraulischen Verbindung von Warmwasserauslaufleitung und Zapfstelle.

Das erfindungsgemäße Wassererwärmungssystem ist dadurch gekennzeichnet, dass der Wassererwärmer eine Erkennungsvorrichtung zur Erkennung von Betriebszuständen und/oder Werten von Betriebsparametern des Wassererwärmers aufweist, und dass an oder in der Nähe der Zapfstelle eine Anzeigevorrichtung zur Anzeige der erkannten Betriebszustände und/oder Werte von Betriebsparametern des Wassererwärmers angeordnet ist. Mit dieser Anzeigevorrichtung erhält der Nutzer eine Information über den Betrieb des Wassererwärmers und kann seine Warmwasserzapfung dieser Information entsprechend anpassen.

## Beschreibung

Die Erfindung betrifft ein Wassererwärmungssystem nach dem Durchlaufprinzip nach dem Oberbegriff des Patentanspruches 1.

Ein gattungsgemäßes Wassererwärmungssystem umfasst in der Regel einen brennstoffbeheizten Wassererwärmer mit einem Brenner zur Wärmeerzeugung aus der Verbrennung eines Brennstoffes wie zum Beispiel Erdgas, einer Brennstoffzuführleitung zum Anschluss an eine Brennstoffversorgungsleitung und zur Zuführung des Brennstoffes zum Brenner, einem Brennstoffdosierventil zum Regeln der Brennstoffzufuhr, einem Wärmeübertrager zum Übertragen der vom Brenner erzeugten Wärme auf Wasser, einer Kaltwasserzulaufleitung zum Anschluss an ein Wasserversorgungsnetz, einer Warmwasserauslaufleitung zum Anschluss an ein Warmwasserverteilnetz, sowie einem Wasserschalter zur Erkennung eines Wasserdurchflusses durch den Wassererwärmer. Des Weiteren umfasst ein Wassererwärmungssystem mindestens eine Zapfstelle zum Zapfen von Warmwasser sowie ferner ein aus Rohrleitungen aufgebautes Warmwasserverteilnetz zur hydraulischen Verbindung von Warmwasserauslaufleitung und Zapfstelle. Bei dem Wassererwärmer kann es sich beispielsweise um einen Trinkwasserdurchlauferhitzer für die Trinkwarmwasserversorgung einer Wohnung oder eines Gebäudes handeln, der Handwaschbecken, Spülbecken, Dusche oder Badewanne mit Trinkwarmwasser versorgt. Die Zapfstellen befinden sich oft weit von dem Wassererwärmer entfernt und lassen keinen Einblick in dessen Funktion zu.

Der Wassererwärmer erkennt mittels seines Wasserschalters, ob er von Wasser durchflossen wird. Ein solcher Durchfluss wird als Wärmeanforderung interpretiert und löst einen Brennerstart mit Wassererwärmung aus. Der Wasserschalter reagiert dabei auf einen aus der Wasserströmung resultierenden Druck.

Eine Temperaturregeleinrichtung am Wassererwärmer, beispielsweise ein Thermostat oder ein Steuergerät zum Steuern der Wassererwärmung, regelt die Isttemperatur des auslaufenden Warmwassers auf den Wert einer vorgebbaren, von der Größe des Wasserdurchflusses unabhängigen Warmwassersolltemperatur. Dies geschieht, indem die Heizleistung (Feuerungsleistung) des Brenners dem Wasserdurchfluss angepasst wird. Heutige Brenner haben einen typischen Leistungsbereich zur Modulation (Variation) ihrer Feuerungsleistung, der den Bereich zwischen einer oberen Leistungsgrenze, der Brennernennleistung ("100 %"), und einer unteren Leistungsgrenze, beispielsweise 33 % der Brennernennleistung, abdeckt. Daraus folgt, dass der mögliche Wasserdurchfluss mit Wassererwärmung auf Solltemperatur ebenfalls in einem Bereich zwischen beispielsweise 33 % und 100 % des Nenndurchflusses liegen kann. Bei einem Wasserdurchfluss größer als der Nenndurchfluss kann die Warmwassersolltemperatur nicht mehr erreicht werden, da selbst die maximale Heizleistung des Brenners nicht ausreicht, die ganze Wassermenge auf die gewünschte Temperatur zu erwärmen. Bei einem Wasserdurchfluss kleiner als ein unterer Grenzwert würde die Warmwasserauslauftemperatur dagegen über die Solltemperatur hinaus ansteigen, da der Brenner sogar noch an seiner unteren Leistungsgrenze zuviel Energie zur Übertragung an das durchfließende Wasser bereitstellen würde. Aus diesem Grund hat der Wasserschalter eine einstellbare Einschaltschwelle, die einen Mindestwasserdurchfluss durch den Wassererwärmer bzw. durch den Wärmeübertrager repräsentiert, bei dem es nicht zu einer Überhitzung des Wassers kommt. Der Mindestwasserdurchfluss ergibt sich rechnerisch aus der Warmwassersolltemperatur und der unteren Brennerheizleistung. Bei einem Wasserdruckwert größer als die Einschaltschwelle gibt der Wasserschalter den Brennerbetrieb und Wassererwärmungsvorgang frei. Bei einem Wasserdruckwert kleiner als die Einschaltschwelle wird der Brennerbetrieb dagegen nicht freigegeben. Das den Wärmeübertrager durchfließende Wasser wird nicht erwärmt.

Eine Person (Nutzer), die beim Zapfen von Warmwasser an einer Zapfstelle den Wasserdurchfluss unter einen Mindestwasserdurchfluss verringert, wird bei heutigen Wassererwärmungssystemen nach einer gewissen Zapfdauer nur noch kaltes Wasser zapfen, da der Brenner des Wassererwärmers aufgrund des zu geringen Wasserdruckes vom Wasserschalter ausgeschaltet wird. Die Zapfdauer zwischen der von der Person nicht beobachtbaren Brennerabschaltung und der wahrgenommenen Absenkung der Warmwassertemperatur hängt ab von der Wasserfließgeschwindigkeit und der Rohrleitungslänge zwischen Wassererwärmer und Zapfstelle. Erst wenn die Temperaturabsenkung wahrgenommen wird, kann die Person durch Erhöhung des Wasserdurchflusses den Wasserschalter betätigen und den Brenner erneut einschalten. Nach einer wieder von der Wasserfließgeschwindigkeit und der Rohrleitungslänge abhängigen Dauer stellt sich erneut die Warmwassersolltemperatur ein. Die Wartezeit und die Temperaturabsenkung werden von der zapfenden Person als unangenehm wahrgenommen.

Aus dem Stand der Technik sind bei Speicherwassererwärmern in der Wohnung oder im Gebäude zentral angeordnete Bedienungsgeräte bekannt, die über eine Anzeigevorrichtung neben Angaben zu einer Raumheizung auch Angaben über den Betriebszustand des Speicherwassererwärmers machen. Dazu gehören beispielsweise die Freigabe oder Sperrung des Speichers zur Nachladung innerhalb einer eingebbaren Warmwasserbereitungszeit oder -sperrzeit oder Hinweise, ob die Warmwassersolltemperatur eingehalten wird.

Der Erfindung liegt die Aufgabe zugrunde, ein nach dem Durchlaufprinzip funktionierendes Wassererwärmungssystem zu schaffen, das den beschriebenen Nachteil im Stand der Technik überwindet, dem Nutzer ein frühzeitiges Reagieren auf wechselnde Betriebszustände des Wassererwärmungssystems ermöglicht und den Warmwasserkomfort erhöht.

Erfindungsgemäß wird dies durch die Gegenstände mit den Merkmalen des Patentanspruches 1 gelöst. Vorteilhafte Weiterbildungen sind den Unteransprüchen zu entnehmen.

Das erfindungsgemäße Wassererwärmungssystem ist **dadurch gekennzeichnet, dass** der Wassererwärmer eine Erkennungsvorrichtung zur Erkennung von Betriebszuständen und/oder Werten von Betriebsparametern des Wassererwärmers aufweist, und dass an oder in der Nähe der Zapfstelle eine Anzeigevorrichtung zur Anzeige dieser erkannten Betriebszustände und/oder Werte von Betriebsparametern des Wassererwärmers angeordnet ist. Mit dieser Anzeigevorrichtung erhält der Nutzer eine Information über den Betrieb des Wassererwärmers und kann seine Warmwasserzapfung dieser Information entsprechend anpassen. Mögliche Betriebszustände können sein ein eingeschalteter oder ausgeschalteter Brenner, ein wegen zu geringem Wasserdurchfluss ausgeschalteter Brenner, ein geöffnetes oder geschlossenes Brennstoffdosierventil, ein vom Wasserdruck betätigter oder nicht betätigter Wasserschalter, und so weiter. Mögliche Betriebsparameter können sein eine Warmwasserauslauftemperatur (Messwert oder auch nur Einhaltung des bzw. Abweichung vom Sollwert) oder eine Wasserdurchflussmenge (Messwert in Prozent vom Nenndurchfluss oder auch nur Einhaltung des bzw. Abweichung von dem auf Solltemperatur erwärmbaren Bereich).

In einer Ausführung weist die Erkennungsvorrichtung Erkennungsmittel auf, die beispielsweise der Erkennung eines Schaltzustandes des Brennstoffventils, eines Schaltzustandes des Wasserschalters, eines Vorhandenseins einer Brennerflamme, einer Wassertemperatur an der Warmwasserauslaufleitung, einer Betriebsbereitschaft des Wassererwärmers, eines Vorliegens oder Nicht-Vorliegens eines Wassererwärmungsvorgangs und/oder einer weiteren Information eines Steuergerätes zum Steuern des Wassererwärmungssystems dienen. Mögliche Erkennungsmittel können sein eine elektrische Kontaktierung von Brennstoffventil oder Wasserschalter zur Prüfung der galvanischen Durchgängigkeit, eine lonisationselektrode, ein Temperaturfühler oder eine Auswerteschaltung am Steuergerät.

Dementsprechend weist die Anzeigevorrichtung an oder in der Nähe der Zapfstelle Anzeigemittel auf, die der Anzeige des erkannten Schaltzustandes des Brennstoffventils, des Schaltzustandes des Wasserschalters, des Vorhandenseins einer Brennerflamme, der Wassertemperatur an der Warmwasserauslaufleitung, der Betriebsbereitschaft des Wassererwärmers, des Vorliegens oder Nicht-Vorliegens eines Wassererwärmungsvorgangs und/oder einer weiteren Information eines Steuergerätes zum Steuern des Wassererwärmungssystems dienen. Das oder die Anzeigemittel geben Signale optischer, akustischer und/oder mechanischer Art wie Lichtsignale, Tonsignale und/oder von Hand zu ertastende Signale. Dabei kann es sich um dauernde und/oder intermittierende Signale, beispielsweise mit variablen Farben, Tonhöhen, Intensitäten und/oder Unterbrechungsdauern handeln. Das Anzeigemittel kann dem Prinzip nach binär, analog, mit einer Skalenanzeige oder mit einer Ziffernanzeige funktionieren. Verschiedene Signale repräsentieren verschiedene Betriebszustände oder Werte von Betriebsparametern.

Die Energie, zum Beispiel elektrische Energie, die die Anzeigevorrichtung zu ihrem Betreiben benötigt, kann mit Hilfe einer an oder in der Nähe der Zapfstelle im Wasserweg angeordneten Wasserkraftmaschine aus dem fließenden Wasser heraus generiert werden. Dann ist kein gesonderter Anschluss an eine netzgebundene Spannungsversorgung erforderlich. Die Wasserkraftmaschine kann durch ein kleines, leichtgängiges Wasserrad (mit Spannungsgenerator) in der Rohrleitung, in der Zapfarmatur oder in der Zapfarmaturanschlussgruppe gebildet werden.

Das Wassererwärmungssystem umfasst eine Datenübertragungseinrichtung, die die Erkennungsvorrichtung im Wassererwärmer und die Anzeigevorrichtung an oder in der Nähe der Zapfstelle drahtgebunden oder drahtlos miteinander verbindet. Über diese Datenübertragungseinrichtung wird der Anzeigevorrichtung die Information über den von der Erkennungsvorrichtung erkannten Betriebszustand und/oder die erkannten Werte von Betriebsparametern des Wassererwärmers übermittelt.

Eine besonders geeignete Ausgestaltung des erfindungsgemäßen Wassererwärmungssystems ist **dadurch gekennzeichnet, dass** das Wassererwärmungssystem eine Erkennungsvorrichtung in Form einer elektrischen Schaltung aufweist, die anhand des Schaltzustandes des Wasserschalters oder des Brennstoffdosierventils ein Vorliegen oder Nicht-Vorliegen eines Wassererwärmungsvorgangs erkennt, dass weiter eine Datenübertragungseinrichtung umfasst ist, die eine rein binäre Information (Brenner-An / Brenner-Aus) über das erkannte Vorliegen oder Nicht-Vorliegen eines Wassererwärmungsvorgangs an eine an der Zapfstelle angeordnete Anzeigevorrichtung weiterleitet, und dass ferner diese ebenfalls von dem Wassererwärmungssystem umfasste Anzeigevorrichtung dem Nutzer der Zapfstelle ein binäres Lichtsignal zur Information über das erkannte Vorliegen oder Nicht-Vorliegen eines Wassererwärmungsvorgangs gibt. Dieses Lichtsignal kann beispielsweise von einer Leuchtdiode stammen, die mit einem Dauerleuchten anzeigt, dass der Brenner des Wassererwärmers eingeschaltet ist und mit Hilfe des Wärmeübertragers Wasser auf Solltemperatur erwärmt. Eine ausgeschaltete Leuchtdiode zeigt an, dass der Brenner nicht in Betrieb ist, sei es dass gar kein Wasser gezapft wird oder dass eine zu geringe Wassermenge gezapft wird, die nicht ausreicht um den Wasserschalter zu betätigen und den Brenner in Betrieb zu nehmen. In einer anderen Ausgestaltung kann die Zapfung einer zu geringen Wassermenge und ein daraus resultierendes Verlöschen der Brennerflamme unter Verwendung einer höher auflösenden, ternären Information (Brenner-An /Brenner-Aus weil kein Wasserdurchfluss / Brenner-Aus weil Wasserdurchfluss vorhanden aber unter Schaltschwelle) durch ein andersfarbiges Licht oder durch ein blinkendes Licht angezeigt werden. In ähnlicher Weise kann auch mit Tonsignalen Auskunft über den Betriebszustand und/oder den Wert eines Betriebsparameters gegeben werden.

Mit dem erfindungsgemäßen Wassererwärmungssystem ist eine Vorrichtung geschaffen, die dem Nutzer an einer Warmwasserzapfstelle mit Licht- oder Tonsignalen Auskunft über die Funktion des Wassererwärmers gibt und ihm ein frühzeitiges Reagieren auf wechselnde Betriebszustände oder Werte von Betriebsparametern des Wassererwärmungssystems ermöglicht. Dadurch wird der Warmwasserkomfort für den Nutzer deutlich erhöht.

## Patentansprüche

1. Wassererwärmungssystem nach dem Durchlaufprinzip, umfassend einen brennstoffbeheizten Wassererwärmer mit einem Brenner, einer Brennstoffzuführleitung, einem Brennstoffdosierventil, einem Wärmeübertrager, einer Kaltwasserzulaufleitung, einer Warmwasserauslaufleitung und einem Wasserschalter zur Erkennung eines Wasserdurchflusses durch den Wassererwärmer, des Weiteren umfassend mindestens eine Zapfstelle zum Zapfen von Warmwasser sowie Rohrleitungen zur hydraulischen Verbindung von Warmwasserauslaufleitung und Zapfstelle,
**dadurch gekennzeichnet, dass** der Wassererwärmer eine Erkennungsvorrichtung zur Erkennung von Betriebszuständen und/oder Werten von Betriebsparametern des Wassererwärmers aufweist, und dass an oder in der Nähe der Zapfstelle eine Anzeigevorrichtung zur Anzeige der erkannten Betriebszustände und/oder Werte von Betriebsparametern des Wassererwärmers angeordnet ist.

2. Wassererwärmungssystem nach Anspruch 1,
**dadurch gekennzeichnet, dass** die Erkennungsvorrichtung Erkennungsmittel aufweist, die der Erkennung eines Schaltzustandes des Brennstoffdosierventils, eines Schaltzuständes des Wasserschalters, eines Vorhandenseins einer Brennerflamme, einer Wassertemperatur an der Warmwasserauslaufleitung, einer Betriebsbereitschaft des Wassererwärmers, eines Vorliegens oder Nicht-Vorliegens eines Wassererwärmungsvorgangs und/oder einer Information eines Steuergerätes zum Steuern des Wassererwärmungssystems dienen.

3. Wassererwärmungssystem nach Anspruch 1 oder 2,
**dadurch gekennzeichnet, dass** die Anzeigevorrichtung Anzeigemittel aufweist, die der Anzeige eines Schaltzustandes des Brennstoffdosierventils, eines Schaltzustandes des Wasserschalters, eines Vorhandenseins einer Brennerflamme, einer Wassertemperatur an der Warmwasserauslaufleitung, einer Betriebsbereitschaft des Wassererwärmers, eines Vorliegens oder Nicht-Vorliegens eines Wassererwärmungsvorgangs und/oder einer Information eines Steuergerätes zum Steuern des Wassererwärmungssystems dienen.

4. Wassererwärmungssystem nach einem der Ansprüche 1 bis 3,
**dadurch gekennzeichnet, dass** das Anzeigemittel Signale optischer, akustischer und/oder mechanischer Art gibt.

5. Wassererwärmungssystem nach einem der Ansprüche 1 bis 4,
**dadurch gekennzeichnet, dass** das Anzeigemittel dauernde oder intermittierende Signale mit variablen Farben, Tonhöhen, Intensitäten und/oder Unterbrechungsdauern gibt.

6. Wassererwärmungssystem nach einem der Ansprüche 1 bis 5,
**dadurch gekennzeichnet, dass** das Anzeigemittel dem Prinzip nach binär, analog, mit einer Skalenanzeige und/oder mit einer Ziffernanzeige funktioniert.

7. Wassererwärmungssystem nach einem der Ansprüche 1 bis 6,
**dadurch gekennzeichnet, dass** die Anzeigevorrichtung die Energie zu ihrem Betreiben mit Hilfe einer an oder in der Nähe der Zapfstelle angeordneten Wasserkraftmaschine aus dem fließenden Wasser entnimmt.

8. Wassererwärmungssystem nach einem der Ansprüche 1 bis 7,
**dadurch gekennzeichnet, dass** das Wassererwärmungssystem eine Datenübertragungseinrichtung umfasst, die die Erkennungsvorrichtung und die Anzeigevorrichtung drahtgebunden oder drahtlos miteinander verbindet und die mit der Erkennungsvorrichtung gewonnenen Daten an die Anzeigevorrichtung überträgt.

9. Wassererwärmungssystem nach einem der Ansprüche 1 bis 8,
**dadurch gekennzeichnet, dass** das Wassererwärmungssystem eine Erkennungsvorrichtung aufweist, die ein Vorliegen oder Nicht-Vorliegen eines Wassererwärmungsvorgangs erkennt, dass weiter eine Datenübertragungseinrichtung umfasst ist, die eine binäre Information über das erkannte Vorliegen oder Nicht-Vorliegen eines Wassererwärmungsvorgangs an eine in der Nähe der Zapfstelle angeordnete, ebenfalls vom Wassererwärmungssystem umfasste Anzeigevorrichtung weiterleitet, und dass ferner die Anzeigevorrichtung dem Benutzer der Zapfstelle ein binäres Lichtsignal über das Vorliegen oder Nicht-Vorliegen eines Wassererwärmungsvorgangs gibt.
